# EUROPÄISCHE PATENTANMELDUNG

(11) **EP 4 744 478 A1**
(43) Veröffentlichungstag der Anmeldung: **20.05.2026**
(21) Anmeldenummer: 25215209.5
(22) Anmeldetag: 12.11.2025
(51) Int. Cl.: A01J 25/16

(54) **ABTROPFVORRICHTUNG FÜR KÄSEMASSE**

(30) Priorität: 15.11.2024 CH 12392024
(71) Anmelder: Kalt Maschinenbau AG, 9604 Lütisburg (CH)
(72) Erfinder: VIDALE, Romeo, 8556 Wigoltingen (CH)
(74) Vertreter: Wenzel Nemetzade Warthmüller Patentanwälte Part mbB

(57) **Zusammenfassung**

Die Erfindung betrifft eine Abtropfvorrichtung (1) zur Aufbewahrung von abzutropfender Käsemasse. Um Arbeiten, die bei der Handhabung der Abtropfvorrichtung (1) und beim Abtropfenlassen der abzutropfender Käsemasse anfallen, zu erleichtern, ist erfindungsgemäß vorgesehen, dass die Abtropfvorrichtung (1) ein Haltegestell (3) und ein schiebbar am Haltegestell (3) angebrachtes Abtropfblech (2) aufweist.

## Beschreibung

Die vorliegende Erfindung betrifft eine Abtropfvorrichtung zur Aufbewahrung von abzutropfender Käsemasse.

Bei der Herstellung von Käse, insbesondere Schnittkäse, wird Käsemasse in einer Käsepresse gepresst, insbesondere um überschüssige Flüssigkeit aus der Käsemasse zu pressen. Nach dem Pressvorgang ist die Käsemasse in der Regel noch nicht ausreichend trocken und auch nicht formstabil. Es wäre jedoch aus wirtschaftlicher Sicht nicht sinnvoll, die Käsemasse so lange in der Käsepresse zu belassen, bis diese ausreichend trockene und formstabile Käselaiber bildet.

Um eine Käsepresse effizient einsetzen zu können, wird die Käsemasse nach dem Pressvorgang aus der Käsepresse entfernt. Ist die Käsemasse nach dem Pressvorgang noch nicht formstabil, wird die Käsemasse in Abtropfformen gegeben, in denen die Käsemasse zumindest für eine vorbestimmte Zeit verbleibt. Die Käsemasse kann alternativ bereits in den Abtropfformen gepresst werden. Zum Beispiel kann die Käsemasse nach dem Pressvorgang lange genug in den Abtropfformen verbleiben, insbesondere um nach dem Pressvorgang überschüssige Restflüssigkeit abzugeben, um chemische oder biologische Prozesse zu ermöglichen und/oder um die Käsemasse formhaltig abkühlen zu lassen. Erst danach kann es möglich sein, die zumindest teilweise formstabile Käsemasse zu entformen und in ein Salzbad zu geben.

Die vorbestimmte Zeit zwischen dem Pressvorgang und der Gabe der Käsemasse in das Salzbad kann mehrere Stunden und zum Beispiel bis zu 24 Stunden, bis zu 18 Stunden, bis zu 15 Stunden, bis zu 12 Stunden, bis zu 10 Stunden oder bis zu 8 Stunden betragen.

Die Abtropfformen mit Käsemasse können in sogenannten Hurden platzsparend gestapelt werden, in denen die Abtropfformen verbleiben, bis die Käsemasse ausreichend getrocknet und formstabil ist.

Die Abtropfformen und Hurden werden in üblicher Weise manuell gehandhabt. Dies ist mit hohem Personaleinsatz und starker körperlicher Belastung verbunden, insbesondere aufgrund des Gewichts der Käsemassen. Bei industrieller Herstellung wird die Produktivität dadurch beeinträchtigt.

Vor dem oben dargelegten Hintergrund bestand die Aufgabe der Erfindung darin, eine Abtropfvorrichtung für Käsemasse bereitzustellen, mit deren Hilfe Abtropfformen mit darin angeordneter Käsemasse einfacher handhabbar ist.

Diese Aufgabe ist durch eine Abtropfvorrichtung gemäß Anspruch 1 gelöst worden. Vorteilhafte Weiterbildungen sind in den jeweiligen Unteransprüchen angegeben und werden nachfolgend erläutert.

Eine erfindungsgemäße Abtropfvorrichtung zur Aufbewahrung von abzutropfender Käsemasse weist wenigstens ein Abtropfblech zur Ablage von abzutropfender Käsemasse und ein Haltegestell auf. Das Abtropfblech ist in einer Schieberichtung relativ zum Haltegestell schiebbar an diesem angebracht.

Durch die schiebbare Anbringung des Abtropfblechs kann dieses einfach durch eine Person aus dem Haltegestell gezogen werden, sodass die Person die Abtropfformen für die Käsemasse einfach erreichen kann. Beispielsweise kann abzutropfende Käsemasse in auf dem ausgezogenen Abtropfblech positionierte Abtropfformen gefüllt werden. Danach kann das Abtropfblech in das Haltegestell eingeschoben werden, um insgesamt Platz zu sparen und eine stabile Gesamtstellung der Abtropfvorrichtung zu erreichen.

Die erfindungsgemäße Abtropfvorrichtung kann durch verschiedene, jeweils für sich vorteilhafte und, sofern nicht anders ausgeführt, beliebig miteinander kombinierbare Ausgestaltungen weiter verbessert werden. Auf die vorteilhaften Ausführungsformen und auch auf die mit ihnen verbundenen Vorteile wird im Folgenden näher eingegangen.

Gemäß einer ersten Ausführungsform der Abtropfvorrichtung kann das Haltegestell zwei mit einem Abstand zueinander angeordnete Halterahmen aufweisen, an denen das wenigstens eine Abtropfblech entlang der Schieberichtung schiebbar angebracht ist. Ein Vorteil einer solchen Ausführungsform kann sein, dass die voneinander beabstandeten Halterahmen aufgrund ihres Abstands zueinander ein ungewolltes Verkippen des Abtropfbleches beim Verschieben zumindest reduzieren oder gar verhindern können.

Gemäß einer weiteren Ausführungsform der Abtropfvorrichtung kann einer der Halterahmen in einer sich quer zur Schieberichtung ersteckenden Rahmenebene angeordnet ist. Insbesondere können beide Halterahmen parallel zueinander angeordnet sein. Ein Vorteil einer solchen Ausführungsform kann sein, dass zumindest einer der Halterahmen oder sogar alle Halterahmen ausreichen Raum für die Schiebebewegung des Abtropfblechs entlang der Schieberichtung bieten können.

Gemäß einer weiteren Ausführungsform der Abtropfvorrichtung kann die Abtropfvorrichtung eine das Schieben des wenigstens einen Abtropfbleches entlang der Schieberichtung führende Führungseinrichtung aufweisen. Die Führungseinrichtung kann die Halterahmen aneinander befestigen und/oder miteinander verbinden. Alternativ oder zusätzlich kann die Führungseinrichtung durch mindestens einen der Rahmenebenen oder beide Rahmenebenen hindurch verlaufen.

Ein Vorteil einer solchen Ausführungsform kann sein, dass aufgrund der Führungseinrichtung das wenigstens eine Abtropfblech einfach entlang der Schieberichtung schiebbar ist, ohne zu verkanten. Ein weiterer oder anderer Vorteil einer solchen Ausführungsform kann sein, dass das Haltegestell weniger leicht verformbar ist, wenn die Führungseinrichtung die Halterahmen unverschieblich zueinander miteinander verbindet. Ein weiterer oder anderer Vorteil einer solchen Ausführungsform kann sein, dass die Führungseinrichtung die Halterahmen zueinander weniger leicht verdrehbar oder sogar unverdrehbar miteinander verbinden kann, wenn die Führungseinrichtung durch mindestens eine der Rahmenebenen oder beide Rahmenebenen hindurch verläuft.

Gemäß einer weiteren Ausführungsform der Abtropfvorrichtung kann die Abtropfvorrichtung eine Schwenkvorrichtung aufweisen. Die Schwenkvorrichtung kann mit einer parallel zu dem wenigstens einen Abtropfblech verlaufenden Schwenkachse versehen sein. Ein Vorteil einer solchen Ausführungsform kann sein, dass die Abtropfvorrichtung ohne weiteres an einer Wendevorrichtung anbringbar ist, um die Abtropfvorrichtung zu wenden, also die Käsemasse umzudrehen.

Folglich kann die in der Abtropfform und auf dem Abtropfblech angeordnete Käsemasse einfacher gewendet werden. Dadurch kann beispielsweise Restflüssigkeit gleichmäßiger und/oder schneller abgeben werden. Ein manuelles Wenden oder manuelles Stapeln und dadurch erforderliches händisches Heben von Hurden kann dadurch vermieden werden. Ebenso kann auf diese Weise vermieden werden, dass neu aufeinander gestapelte Hurden wieder aneinander befestigt werden müssen, um beispielsweise ein sicheres Wenden eines Hurdenstapels zu ermöglichen.

Gemäß einer weiteren Ausführungsform der Abtropfvorrichtung kann die Schwenkvorrichtung die Halterahmen aneinander befestigen und/oder miteinander verbinden, insbesondere nach Art eines Fachwerks und/oder durch eine Mehrzahl an Befestigungsstreben. Ein Vorteil einer solchen Ausführungsform kann sein, dass ein ungewolltes Verformen des Haltegestells verhindert oder eine etwaige Gefahr zumindest weiter reduziert wird.

Gemäß einer weiteren Ausführungsform der Abtropfvorrichtung kann die Schwenkvorrichtung zwei die Halterahmen fachwerkartig aneinander befestigende und/oder miteinander verbindende Befestigungsstreben aufweisen. Die Befestigungsstreben können sich in einem Kreuzungsbereich kreuzen. Eine Schwenkachse der Schwenkvorrichtung kann sich durch den Kreuzungsbereich erstrecken.

Ein Vorteil einer solchen Ausführungsform kann sein, dass die mechanische Stabilität des Haltegestells, ohne dessen Gewicht unnötig zu vergrößern, etwa durch Erhöhung der Materialstärke der Halterahmen, verbessert wird. Ein weiterer oder anderer Vorteil einer solchen Ausführungsform kann sein, dass sich kreuzende Befestigungsstreben weniger Platz benötigen und die Stabilität weiter erhöhen, etwa wenn die Befestigungsstreben im Kreuzungsbereich aneinander befestigt sind. Ein Vorteil einer solchen Ausführungsform kann ferner sein, dass die Schwenkachse platzsparend angeordnet werden kann. Sind die Befestigungsstreben im Kreuzungsbereich aneinander befestigt, kann die Schwenkachse nicht nur platzsparend angeordnet werden, sondern auch in einem besonders stabilen Bereich des Haltegestells.

Gemäß einer weiteren Ausführungsform der Abtropfvorrichtung weist die Abtropfvorrichtung als Wendevorrichtung ein Schwenkgestell mit zumindest einer Schwenkhalterung zum schwenkbaren Halten der Schwenkvorrichtung auf. Das Schwenkgestell kann als Wagen mit Rollen ausgebildet sein. Ein Vorteil einer solchen Ausführungsform kann sein, dass die in der Abtropfform und auf dem Abtropfblech angeordnete Käsemasse einfacher gewendet werden und dadurch beispielsweise Restflüssigkeit gleichmäßiger und/oder schneller abgeben kann. Der Einsatz bisher verwendeter separaten Wendevorrichtungen kann dadurch vermieden werden. Produktivitätseinschränkungen durch Wendevorrichtungen, die bereits mit anderen Hurden belegt sind, lassen sich verringern. Insgesamt kann das Wenden damit vereinfacht und auch logistisch begünstigt werden.

Gemäß einer weiteren Ausführungsform der Abtropfvorrichtung kann die Schwenkvorrichtung und die zumindest eine Schwenkhalterung wenigstens abschnittsweise wiederholt ineinander einsetzbar und voneinander entfernbar ausgestaltet sein. Beispielsweise kann die Schwenkvorrichtung und die zumindest eine Schwenkhalterung wenigstens abschnittsweise werkzeugfrei ineinander einsetzbar und voneinander entfernbar ausgestaltet sein. Ein Vorteil einer solchen Ausführungsform kann sein, dass die Schwenkvorrichtung für mehrere Haltegestelle verwendet werden kann und auch Reparatur- und Austauscharbeiten einfach vorgenommen werden können. Ein weiterer oder anderer Vorteil einer solchen Ausführungsform kann sein, dass das Haltegestell mit besonders geringem Aufwand gehoben und beispielsweise in ein Flüssigkeitsbad, insbesondere Salzbad, abgesenkt werden kann. Die den jeweiligen Boden berührenden Rollen oder Aufstellflächen der Abtropfvorrichtung können dann bei einem Anheben des Haltegestells an Ort und Stelle verbleiben und führen mithin nicht zu einer Verunreinigung des jeweiligen Flüssigkeitsbads.

Gemäß einer weiteren Ausführungsform der Abtropfvorrichtung kann das Haltegestell eine Vorderseite und eine der Vorderseite gegenüberliegende Rückseite aufweisen. Das wenigstens eine Abtropfblech kann durch die Vorderseite hindurch entlang der Schieberichtung schiebbar sein. Das Haltegestell kann an der Rückseite zumindest einen Begrenzungsbügel aufweisen, der zur Begrenzung einer Schiebebewegung des wenigstens einen Abtropfblechs durch die Rückseite angeordnet ist. Ein Vorteil einer solchen Ausführungsform kann sein, dass das Haltegestell durch den Begrenzungsbügel eine maximal eingeschobene Position für das Abtropfblech vorgeben kann, wodurch sich die Bedienung der Abtropfvorrichtung vereinfacht. In seiner maximal eingeschobenen Position kann das Abtropfblech am Begrenzungsbügel anliegen.

Gemäß einer weiteren Ausführungsform der Abtropfvorrichtung kann der zumindest eine Begrenzungsbügel quer zum wenigstens einen Abtropfblech verlaufend und/oder in einer stationären und ungeschwenkten Abtropfposition des Haltegestells entlang einer Vertikalrichtung verlaufend angeordnet sein. Ein Vorteil einer solchen Ausführungsform kann sein, dass ein einziger Begrenzungsbügel die maximal eingeschobene Position für mehrere Abtropfbleche vorgeben kann, wodurch sich die Konstruktion der Abtropfvorrichtung vereinfacht und gleichzeitig eine sichere Bedienung gewährleistet.

Gemäß einer weiteren Ausführungsform der Abtropfvorrichtung kann der zumindest eine Begrenzungsbügel zwei Längsenden und einen die Längsenden miteinander verbindenden Verbindungsabschnitt aufweisen, wobei die Längsenden und der Verbindungsabschnitt jeweils am Haltegestell befestigt sind. Ein Vorteil einer solchen Ausführungsform kann sein, dass der Begrenzungsbügel die mechanische Stabilität des Haltegestells weiter verbessert.

Gemäß einer weiteren Ausführungsform der Abtropfvorrichtung kann das Haltegestell zwei einander gegenüberliegend angeordnete vertikale Endseiten aufweisen. An einer der vertikalen Endseiten kann ein Anschlagmittel angeordnet und angebracht sein. Ein Vorteil einer solchen Ausführungsform kann sein, dass die Abtropfvorrichtung und insbesondere das Haltegestell ohne weiteres an einem Hebezeug, etwa ein Haken eines Krans, angebracht werden kann, beispielswiese, um das Haltegestellt anzuheben, etwa um das Haltegestell und das Schwenkgestell voneinander zu trennen oder miteinander zu vereinen.

Gemäß einer weiteren Ausführungsform der Abtropfvorrichtung kann das Anschlagmittel den Abstand zwischen den Halterahmen überbrücken. Alternativ oder zusätzlich kann das Anschlagmittel an einer den Abstand zwischen dem Halterahmen überbrückenden Querstrebe angeordnet sein oder eine solche Querstrebe aufweisen. Ein Vorteil einer solchen Ausführungsform kann sein, dass das Anschlagmittel das Haltegestell weiter mechanisch verstärkt und etwa versteift.

Gemäß einer weiteren Ausführungsform der Abtropfvorrichtung kann die Abtropfvorrichtung mehrere entlang der Schieberichtung relativ zum Haltegestell schiebbar am Haltegestell angebrachte Abtropfbleche aufweisen. Die mehreren Abtropfbleche können in einer quer zur Schieberichtung verlaufenden Stapelrichtung hintereinander und/oder übereinander stapelbar sein. Ein Vorteil einer solchen Ausführungsform kann sein, dass mehrere Abtropfformen mit Käsemasse einfach gemeinsam handhabbar sind. Die Produktivität kann auf diese Weise weiter verbessert werden.

Gemäß einer weiteren Ausführungsform der Abtropfvorrichtung kann das wenigstens eine Abtropfblech oder jeweils ein Abtropfblech der mehreren Abtropfbleche einen doppelten Boden, insbesondere aus Streckmetall, aufweisen. Die Oberfläche eines Teilbodens des doppelten Bodens oder beide Teilböden des doppelten Bodens kann elektropoliert und/oder beschichtet sein, insbesondere zur Haftverringerung. Zumindest ein Teilboden des doppelten Bodens kann gelocht oder siebförmig oder gitterförmig ausgestaltet sein.

Ein Vorteil einer solchen Ausführungsform kann sein, dass Käsemasse weniger am Boden haftet. Ein weiterer Vorteil einer solchen Ausführungsform kann sein, dass zwischen den Teilböden des doppelten Bodens Luft einfach zirkulieren oder bewegt werden kann, was eine Temperierung und insbesondere Kühlung der Käsemasse vereinfacht. Weist zumindest einer der Teilböden des doppelten Bodens Löcher auf, ist also gelocht oder siebförmig oder gitterförmig, kann Flüssigkeit einfacher durch den Teilboden abfließen. Insbesondere wenn der Teilboden, auf dem die Abtropfform aufliegt, Löcher aufweist, kann aus der Käsemasse austretende Flüssigkeit leichter abgeführt werden und/oder Luft einfacher in Richtung auf die Käsemasse zu oder entlang der Käsemasse oder des anderen der Teilböden geführt werden.

Gemäß einer weiteren Ausführungsform kann die Abtropfvorrichtung mehrere und beispielsweise mindestens zwei, drei, vier, fünf, sechs, sieben, acht, neun, zehn oder mehr Abtropfbleche zur Ablage von abzutropfender Käsemasse, die entlang der Schieberichtung relativ zum Haltegestell schiebbar an diesem angebracht sind, aufweisen. In einem eingeschobenen Zustand können die Abtropfbleche quer zur Schieberichtung miteinander fluchtend angeordnet sein. Ein Vorteil einer solchen Ausführungsform kann sein, dass ohne weiteres eine Vielzahl von Käsemassen abtropfbar ist, wobei die Abtropfvorrichtung insgesamt platzsparend ausgebildet ist.

Eine lichte Weite zwischen einer zwischen zwei Abtropfblechen, insbesondere zwei Abstellböden von zwei benachbarten Abtropfblechen, angeordneten Abtropfform und einem der Abtropfbleche, insbesondere einem Abstellboden eines Abtropfblechs, quer zur Schieberichtung kann mindestens der Höhe der Abtropfformen entsprechen. Insbesondere kann die lichte Weite geringfügig größer und zum Beispiel 1 mm , 2 mm, 3 mm, 4 mm oder bis zu 5 mm größer sein als die Höhe der Abtropfform. Ein Vorteil einer solchen Ausführungsform kann sein, dass das Schieben eines der Abtropfbleche, auf dem eine Abtropfform angeordnet ist, ohne weiteres möglich ist, wobei ein Auslaufen der Käsemasse aus der Abtropfform, etwa beim Wenden des Haltegestells, dennoch verhindert wird. Flüssigkeit kann jedoch weiterhin abfließen.

Ein weiterer unabhängiger Aspekt der vorliegenden Erfindung betrifft eine Abtropfform für Käsemasse mit einer Mehrzahl von Aufnahmeabschnitten zur Aufnahme abzutropfender Käsemasse, wobei die Aufnahmeabschnitte bevorzugt durch einen als Verbindungsplatte ausgebildeten Verbindungsabschnitt miteinander verbunden sind.

In vorteilhafter Weise kann der Verbindungsabschnitt entlang einer Ebene verlaufen, die sich beabstandet von zumindest einem Stirnende und/oder von beiden Stirnenden eines Aufnahmeabschnitts erstreckt, insbesondere mittig zwischen zwei Stirnenden eines Aufnahmeabschnitts.

Zum besseren Verständnis der vorliegenden Erfindung wird nachfolgend auf die Zeichnungen Bezug genommen. Diese zeigen schematisch lediglich Ausführungsbeispiele des Erfindungsgegenstands. Merkmale dieser Ausführungsbeispiele sind unabhängig voneinander kombinierbar.

In den Figuren und der dazugehörigen Beschreibung sind gleiche oder gleichwirkende Teile mit den gleichen Bezugszeichen versehen.

### Es zeigen:

- Figur 1: eine Abtropfvorrichtung gemäß einem Ausführungsbeispiel der vorliegenden Erfindung in einer schematischen Perspektivansicht mit einem ausgeschobenen oder ausgezogenen Abtropfblech,
- Figur 2: die Abtropfvorrichtung des Ausführungsbeispiels der Figur 1 mit eingeschobenem Abtropfblech in einer schematischen Perspektivansicht,
- Figur 3: eine Abtropfvorrichtung gemäß einem Ausführungsbeispiel der vorliegenden Erfindung in einer teilweise geschwenkten Abtropfposition in einer schematischen Perspektivansicht,
- Figur 4: eine vergrößerte Teilansicht des Ausführungsbeispiels der Figur 3,
- Figur 5: eine Abtropfvorrichtung gemäß einem Ausführungsbeispiel der vorliegenden Erfindung in einer vollständig umgeschwenkten oder gewendeten Abtropfposition in einer schematischen Perspektivansicht,
- Figur 6: ein Ausführungsbeispiel eines Abtropfblechs einer Abtropfvorrichtung gemäß einem der vorherigen Ausführungsbeispiele in einer schematischen Perspektivansicht,
- Figur 7: ein weiteres Ausführungsbeispiel das Abtropfblech in einer schematischen Schnittansicht und
- Figur 8: noch ein weiteres Ausführungsbeispiel das Abtropfblech in einer schematischen und geschnittenen Perspektivansicht.

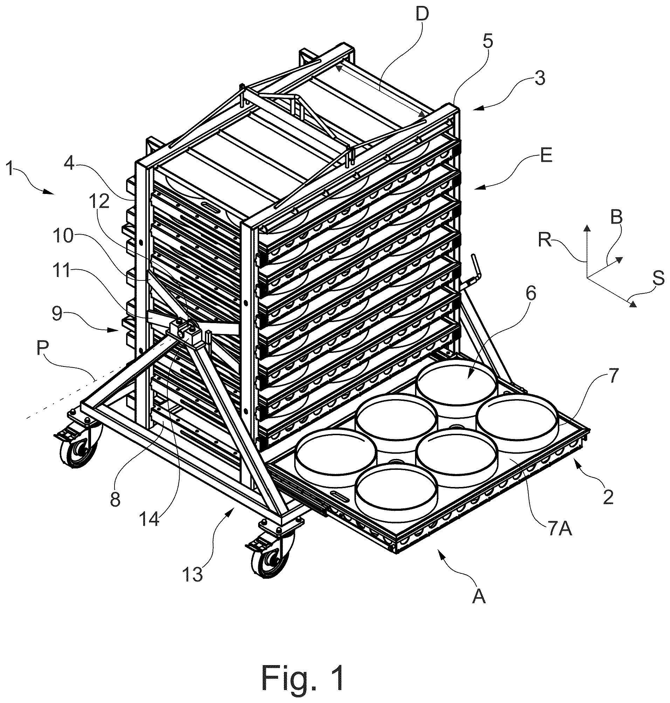

Figur 1 zeigt ein Ausführungsbeispiel einer Abtropfvorrichtung 1 zur Aufbewahrung von abzutropfender Käsemasse. Die Abtropfvorrichtung 1 weist wenigstens ein Abtropfblech 2 zur Ablage von abzutropfender Käsemasse auf. Ferner weist die Abtropfvorrichtung 1 ein Haltegestell 3 auf. Das Abtropfblech 2 ist entlang einer Schieberichtung S relativ zum Haltegestell 3 schiebbar an diesem angebracht.

Die Abtropfvorrichtung 1 kann mehrere und beispielsweise mindestens zwei, drei, vier, fünf, sechs, sieben, acht, neun, zehn oder mehr Abtropfbleche 2 zur Ablage von abzutropfender Käsemasse aufweisen. Die Abtropfbleche 2 können insbesondere in einer senkrecht zur Schieberichtung S verlaufenden Stapelrichtung R aufeinanderfolgend angeordnet oder gestapelt sein. Im dargestellten Ausführungsbeispiel weist die Abtropfvorrichtung 1 beispielhaft acht Abtropfbleche 2 auf. Ausgewählte oder alle der Abtropfbleche 2 können entlang der Schieberichtung S relativ zum Haltegestell 3 schiebbar an diesem angebracht sein. Zumindest in einem eingeschobenen Zustand E der Abtropfbleche 2 können die Abtropfbleche 2 quer zur Schieberichtung S miteinander fluchtend angeordnet sein. Wenn die Abtropfbleche 2 miteinander fluchten, sind die Projektionen der Abtropfbleche 2 quer zu Schieberichtung S vorzugsweise deckungsgleich. Im gezeigten Ausführungsbeispiel sind beispielhaft das unterste der Abtropfbleche 2 in seinem ausgezogenen Zustand A und die in der Stapelrichtung R darüber angeordneten Abtropfbleche 2 in ihrem eingeschobenen Zustand E dargestellt.

Das Haltegestell kann zwei Halterahmen 4, 5 aufweisen. Die beiden Halterahmen 4, 5 können in einem Abstand D zueinander angeordnet sein. Der Abstand D kann parallel zur beziehungsweise in Schieberichtung S verlaufen. Das wenigstens eine Abtropfblech 2 kann entlang der Schieberichtung S schiebbar an mindestens einem oder sogar an beiden Halterahmen 4, 5 angebracht sein.

Wenigstens einer der Halterahmen 4, 5 kann in einer sich quer zur Schieberichtung S ersteckenden Rahmenebene angeordnet sein. Die Rahmenebene kann parallel zur beziehungsweise in Stapelrichtung R und einer quer zur Stapelrichtung R und zur Schieberichtung S verlaufenden Breitenrichtung B der Abtropfvorrichtung 1 angeordnet sein.

Der Abtropfvorrichtung 1 kann wenigstens eine Abtropfform 6 zugeordnet sein. Die wenigstens eine Abtropfform 6 kann Bestandteil der Abtropfvorrichtung 1 sein und/oder zusammen mit der Abtropfvorrichtung 1 eingesetzt werden. Insbesondere kann der Abtropfvorrichtung 1 eine Mehrzahl von Abtropfformen 6 zugeordnet sein oder die Abtropfvorrichtung 1 kann eine Mehrzahl von Abtropfformen 6 aufweisen.

Die Abtropfform 6 ist vorzugsweise dazu ausgebildet, abzutropfende Käsemasse aufzunehmen. Hierzu kann die Abtropfform 6 wenigstens einen Aufnahmeabschnitt 7 zur Aufnahme der abzutropfenden Käsemasse aufweisen. In vorteilhafter Weise kann die Abtropfform 6 eine Mehrzahl von Aufnahmeabschnitten 7 aufweisen, jeweils zur Aufnahme von abzutropfenden Käsemasse.

Der Aufnahmeabschnitt 7 kann mit zylindrischen und/oder mit Flüssigkeit durchlassenden Mantelflächen ausgebildet sein. Ebenso kann der Aufnahmeabschnitt 7 an zumindest einem Stirnende oder beiden Stirnenden offen ausgebildet sein. Die Mantelflächen können mithin zwischen offenen Stirnenden des Aufnahmeabschnitts verlaufen.

Die Höhe der Mantelflächen kann geringer bemessen sein, als ein in dem Aufnahmeabschnitt anzuordnender beziehungsweise abzutropfender Käselaib.

In einem besonders einfachen Ausführungsbeispiel kann der Aufnahmeabschnitt 7 rohrförmig ausgestaltet sein. Hierzu können die Mantelflächen vollständig oder im Wesentlichen vollständig geschlossen ausgebildet sein. Die Mantelflächen können für Flüssigkeit undurchlässig sein.

Alternativ können die Mantelflächen zumindest teilweise offen ausgebildet sein, beispielsweise mit Ablauföffnungen versehen sein. Die Mantelflächen können beispielsweise Löcher aufweisen, also beispielsweise siebförmig oder gitterförmig ausgebildet sein.

Es ist ferner möglich, dass an zumindest einem Stirnende des Aufnahmeabschnitts 7 eine Stirnfläche ausgebildet ist, insbesondere eine Stirnfläche mit Ablauföffnungen, beispielsweise in siebförmiger und/oder gitterförmiger Ausgestaltung. Eine solche Stirnfläche kann fest und/oder einstückig mit der Mantelfläche verbunden sein. Ebenso kann eine solche Stirnfläche beziehungsweise die jeweils andere Stirnfläche als stirnseitiger Deckel ausgebildet sein, der mit der jeweiligen Mantelfläche lösbar verbunden ist, um beispielsweise das Einbringen und/oder Entnehmen von Käsemasse beziehungsweise eines Käselaibs in und/oder aus dem Aufnahmeabschnitt 7 zu ermöglichen.

Die Abtropfform 6 kann mehrere Aufnahmeabschnitte 7 aufweisen, die insbesondere über eine Verbindungsabschnitt 7A verbunden sind, wobei der Verbindungsabschnitt 7A bevorzugt als Verbindungsplatte ausgebildet sein kann.

Der Verbindungsabschnitt 7A kann auf einem Rand des Abtropfblechs 2 aufliegen und/oder durch Einsetzen in und/oder auf das das Abtropfblechs 2 seitlich durch den Rand des Abtropfblechs 2 geführt und/oder umfasst sein.

Der Aufnahmeabschnitt 7 kann über ein Stirnende oder eine Stirnfläche auf einem Abstellboden des Abtropfblechs 2 aufliegen.

Ebenso kann der Verbindungsabschnitt 7A Ablauföffnungen und/oder Greiföffnungen zur vereinfachten Handhabung aufweisen.

Schließlich kann der Verbindungsabschnitt 7A in Höhenrichtung des zumindest einen Aufnahmeabschnitts 7 mittig ausgebildet sein. Der Verbindungsabschnitt 7A kann sich entlang einer Ebene erstrecken, die von beiden Stirnenden des Aufnahmeabschnitts 7 beabstandet ist.

Das Abtropfblech 2 kann für abgetropfte Flüssigkeit durchlässig sein. Beispielsweise kann das Abtropfblech 2 Ablauföffnungen aufweisen. Beispielsweise kann das Abtropfblech 2 wenigstens abschnittsweise gelocht oder gitterförmig oder siebförmig ausgebildet sein.

Zwischen entlang der Stapelrichtung R aufeinander folgenden Abtropfblechen 2 kann ein Zwischenraum verbleiben. Insbesondere kann der Zwischenraum zwischen den Abstellböden der aufeinander folgenden Abtropfbleche 2 ausgebildet sein. In der Stapelrichtung R kann der Zwischenraum eine Höhe aufweisen, die mindestens der Höhe des Aufnahmeabschnitts 7 der Abtropfform 6 entspricht. Insbesondere kann die Höhe des Zwischenraums geringfügig und zum Beispiel um 1 mm, 2 mm, 3 mm, 4 mm bis zu 5 mm größer sein als die Höhe des Aufnahmeabschnitts 7. Hierdurch kann ein Schieben des Abtropfblechs vereinfacht sein, auch wenn eine Abtropfform 6 auf dem Abtropfblech 2 abgestellt ist.

Entlang der Schieberichtung S und der Breitenrichtung B kann das Abtropfblech 2 so bemessen sein, dass wenigstens eine Abtropfform 6 auf dem Abtropfblech 2 abstellbar ist.

Das Abtropfblech 2 kann entlang der Breitenrichtung B und/oder der Schieberichtung S größer bemessen sein als die Abtropfform 6 und/oder deren Aufnahmeabschnitt 7. Beispielsweise kann das Abtropfblech 2 in der Breitenrichtung B größer sein als in der Schieberichtung S. Insbesondere kann das Abtropfblech 2 so bemessen sein, dass in der Breitenrichtung B eine größere Anzahl an Abtropfformen 6 und/oder Aufnahmeabschnitten 7 hintereinander anordnenbar ist, als in der Schieberichtung S.

Im dargestellten Ausführungsbeispiel kann das Abtropfblech 2 beispielhaft so bemessen sein, dass insgesamt sechs Aufnahmeabschnitte 7 darauf abstellbar sind, wobei entlang der Breitenrichtung B drei Aufnahmeabschnitte 7 und in der Schieberichtung S zwei Aufnahmeabschnitte 7 hintereinander angeordnet sind. Entlang der Schieberichtung S können also weniger Aufnahmeabschnitte 7 anordnenbar sein als in der Breitenrichtung B. Hierdurch kann die Gewichtsverteilung der Abtropfvorrichtung 1 bei einem mit einer Abtropfform 6 oder mit mehreren Abtropfformen 6 belegten Abtropfblech 2 günstiger sein, wodurch ein Kipprisiko der Abtropfvorrichtung 1 auch bei ausgezogenem Abtropfblech 2 verringert ist.

Die Abtropfvorrichtung kann eine das Schieben des wenigstens einen Abtropfbleches 2 entlang der Schieberichtung S führende Führungseinrichtung 8 aufweisen. Die Führungseinrichtung 8 kann eine Schienenführung, etwa eine Teleskopschiene, oder sogar ein Paar davon, aufweisen. Für jedes Abtropfblech 2 kann eine Führungseinrichtung 8 vorgesehen sein. Die Führungseinrichtung 8 kann die Halterahmen 4, 5 aneinander befestigen. Dies kann nicht nur das Haltegestell 3 versteifen, sondern auch den für die Führungseinrichtung 8 in der Breitenrichtung B benötigten Bauraum verringern. Die Führungseinrichtung 8 kann die Halterahmen 4, 5 miteinander verbinden. Die Führungseinrichtung 8 kann durch mindestens eine der Rahmenebenen oder beide Rahmenebenen hindurch verlaufen.

Eine erste Teilschiene der Führungseinrichtung 8 kann an den Halterahmen 4, 5 befestigt sein. Beispielsweise kann einer der Halterahmen 4 eine Seite aufweisen, die einer Seite des anderen der Halterahmen 5 gegenüberliegt. Die erste Teilschiene kann an diesen einander gegenüberliegenden Seiten der Halterahmen 4, 5 angebracht und beispielswiese an diesen starr befestigt sein. Eine mit der ersten Teilschiene zur Führung der Schiebebewegung wechselwirkende und beispielsweise in der ersten Teilschiene gleitende zweite Teilschiene kann bewegungsübertragend mit dem Abtropfblech 2 verbunden sein.

Die Abtropfvorrichtung 1 und insbesondere das Haltegestell 3 kann eine Schwenkvorrichtung 9 aufweisen. Mit Hilfe der Schwenkvorrichtung 9 kann das Haltegelstell 3 um eine Schwenkachse P schwenkbar oder drehbar sein. Wird das Haltegestellt 3 von seiner in der Figur 1 gezeigten Ausgangsposition etwa um 180 ° um die Schwenkachse P geschwenkt oder gedreht oder gewendet, werden gleichzeitig eine auf dem Abtropfblech 2 angeordnete Abtropfform 6 und die darin angeordnete Käsemasse gewendet, sodass abzutropfende Flüssigkeit einfacher abtropfen kann. Ist die Höhe des Zwischenraums zwischen den aufeinander folgenden Abtropfblechen 2 größer als die Höhe des Aufnahmeabschnitts 7, kann dies das Ablaufen der abgetropften Flüssigkeit auch im gedrehten oder geschwenkten oder gewendeten Zustand des Haltegestells 3 vereinfachen.

Im vollständig umgedrehten oder umgeschwenkten oder gewendeten Zustand kann die Abtropfform 6 und/oder die darin befindliche Käsemasse auf einem Abtropfblech 2 aufliegen, das in der Stapelrichtung hinter dem Abtropfblech 2 angeordnet ist, auf dem die Abtropfform 6 und/oder die darin befindliche Käsemasse in einer ungeschwenkten Position des Haltegestells 2 aufliegt beziehungsweise zuvor auflag.

Die Schwenkachse P kann parallel zu dem wenigstens einen Abtropfblech 2 und beispielsweise parallel zur Breitenrichtung B verlaufen.

Die Schwenkvorrichtung 9 kann die Halterahmen 4, 5 insbesondere starr aneinander befestigen und/oder miteinander verbinden. Beispielsweise kann die Schwenkvorrichtung 9 die Halterahmen 4, 5 nach Art eines Fachwerks starr aneinander befestigen und/oder miteinander verbinden. Die Schwenkvorrichtung 9 kann eine Mehrzahl an Befestigungsstreben 10, 11 aufweisen, die die Halterahmen fachwerkartig miteinander verbinden.

Insbesondere kann die Schwenkvorrichtung 9 zwei die Halterahmen 4, 5 fachwerkartig aneinander befestigende und/oder miteinander verbindende Befestigungsstreben 10, 11 aufweisen. Die Befestigungsstreben 10, 11 können sich in einem Kreuzungsbereich kreuzen. Im Kreuzungsbereich können die Befestigungsstreben 10, 11 zueinander unverschiebbar miteinander verbunden sein. Die Schwenkachse P, die auch als Dreh- oder Wendeachse bezeichnet werden kann, kann durch den Kreuzungsbereich verlaufen.

Die Befestigungsstreben 10, 11 können jeweils aus einem Stück Metall gefertigt sein oder sogar daraus bestehen, und im Kreuzungsbereich aneinander befestigt und zum Beispiel miteinander verschweißt sein. Alternativ können die Befestigungsstreben 10, 11 aus einem durchgängigen Teil, etwa ein Metallteil, gefertigt sein oder sogar daraus bestehen, und zum Beispiel aus einem Blech gefräst, geschnitten oder gestanzt sein.

Die Abtropfvorrichtung 1 und insbesondere das Haltegestell 2 kann an entlang der Breitenrichtung B voneinander weg weisenden Seiten jeweils zwei Befestigungsstreben 10, 11 aufweisen. Die Schwenkachse P kann durch die beidseitig der Abtropfvorrichtung 1 und insbesondere des Haltegestells 2 angeordneten Kreuzungsbereiche verlaufen. Entlang der Breitenrichtung B können die Kreuzungsbereiche miteinander fluchten. Die Schwenkachse P kann als eine die Kreuzungsbereiche miteinander verbindende Stange ausgebildet sein. Alternativ kann die Schwenkachse P zwischen den Kreuzungsbereichen eine virtuelle Achse sein, die zwischen den Kreuzungsbereichen nicht materiell ausgebildet ist. Die Schwenkachse P kann beispielsweise durch zumindest einen Achsstift 12 vorgegeben sein. Der wenigstens eine Achsstift 12 kann entlang der Breitenrichtung B vom Haltegestell 3 weg vorspringen und beispielsweise vom Kreuzungsbereich der Befestigungsstreben 10, 11 weg vorspringen. Der Achsstift 12 kann an wenigstens einer der Befestigungsstreben 10, 11 befestigt, beispielsweise verschraubt oder verschweißt, und als Metallteil ausgebildet sein.

Die Abtropfvorrichtung 1 kann ein Schwenkgestell 13 aufweisen. Das Schwenkgestell 13 kann zumindest eine Schwenkhalterung 14 aufweisen, um die Schwenkvorrichtung 9 schwenkbar zu halten. Das Schwenkgestell 13 kann besonders bevorzugt als Wagen mit Rollen ausgebildet sein.

Die Schwenkvorrichtung 9 und die zumindest eine Schwenkhalterung 14 können wenigstens abschnittsweise wiederholt ineinander einsetzbar und voneinander entfernbar ausgestaltet sein. Insbesondere können die Schwenkvorrichtung 9 und die zumindest eine Schwenkhalterung 14 werkzeugfrei ineinander einsetzbar und voneinander entfernbar ausgestaltet sein.

Weist die Schwenkvorrichtung 9 beispielswiese den zumindest einen Achsstift 12 auf, kann die Schwenkhalterung 9 eine Aufnahmeöffnung für den Achsstift 12 aufweisen. Die Aufnahmeöffnung kann wenigstens abschnittsweise komplementär zum Achsstift 12 ausgestaltet sein. Beispielsweise kann sich die Aufnahmeöffnung in einer Richtung, die entgegen die Schwerkraftrichtung weisen kann, öffnen. Eine solche Aufnahmeöffnung kann als Aufnahmenut, als Aufnahmekanal oder als Aufnahmemulde ausgebildet sein. Der Achsstift 12 kann dann einfach in die Aufnahmeöffnung eingesetzt und durch die Aufnahmeöffnung schwenkbar, aber zumindest entlang der Schieberichtung S unverschiebbar, gehalten werden.

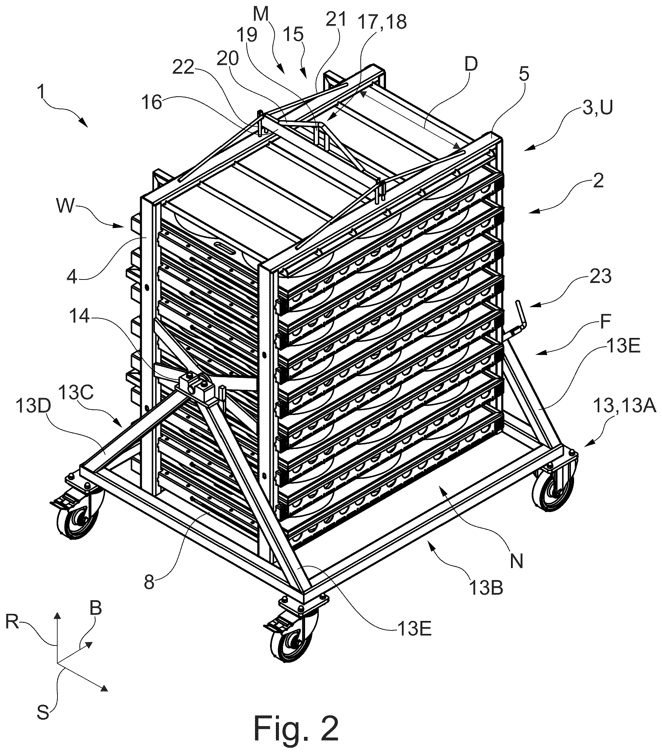

Figur 2 zeigt das Ausführungsbeispiel der Figur 1, wobei alle Abtropfbleche 2 vollständig in das Haltegestell 2 eingeschoben sind. Ferner ist das Haltegestell 3 wie in Figur 1 in einer ungeschwenkten Abtropfposition U angeordnet.

Das Haltegestell 3 weist eine Vorderseite F und eine entlang der Schieberichtung S von der Vorderseite F beabstandet angeordnete Rückseite W auf. Das wenigstens eine Abtropfblech 2 kann entlang der Schieberichtung S durch die Vorderseite F schiebbar sein. Die Vorderseite F kann durch einen der Halterahmen 5 oder durch die durch diesen Halterahmen 5 aufgespannte Rahmenebene gebildet sein. Der Halterahmen 5 kann entlang der Breitenrichtung B eine lichte Weite aufweisen, die mindestens der Breite des Abtropfblechs 2, optional mit zumindest einem Teil der Führungseinrichtung 8, entspricht.

Das Haltegestell 3 weist zwei einander gegenüberliegend angeordnete vertikale Endseiten M, N auf, die entlang der Schwenkrichtung S hintereinander und/oder voneinander beabstandet angeordnet sein können. An wenigstens einer der vertikalen Endseiten M kann ein Anschlagmittel 15 angeordnet und/oder angebracht sein. Das Anschlagmittel 15 kann ausgebildet sein, um das Haltegestell 3 an einem Hebezeug, etwa ein Haken eines Krans, anzuschlagen, um das Haltegestell 3 anzuheben oder abzusenken. Die vertikalen Endseiten M, N können in der dargestellten ungeschwenkten Abtropfposition U eine Oberseite und eine Unterseite des Haltegestells 3 und zum Beispiel auch der Halterahmen 4, 5 sein.

Das Anschlagmittel 15 kann eine Querstrebe 16 aufweisen, die den Abstand D zwischen den Halterahmen 4, 5 überbrückt. Alternativ kann das Anschlagmittel 15 an einer den Abstand D zwischen dem Halterahmen 4, 5 überbrückenden Querstrebe angeordnet sein.

Im gezeigten Ausführungsbeispiel weist das Anschlagmittel 15 die Querstrebe 16 auf, die die Halterahmen 4, 5 entlang der Schieberichtung S überbrückt. An einer von dem Haltegestell 3 weg weisenden Oberseite kann das Anschlagmittel 15 ein Anschlagelement 17 aufweisen. Das Anschlagelement 17 kann an der Oberseite befestigt und beispielsweise mit dieser verschweißt sein.

Zum Beispiel weist das Anschlagelement 17 eine im Wesentlichen dreieckige Form auf. Eine Grundseite der dreieckigen Form kann von der Oberseite der Querstrebe 16 gebildet sein. Eine von der Grundseite weg weisende Ecke 18 oder Spitze des Dreiecks kann entlang der Querstrebe 16 und/oder der Schieberichtung S mittig der Querstrebe 16 angeordnet sein. Das Anschlagelement 17 kann wenigstens eine Haltestrebe 19 aufweisen, die die Querstrebe 16 mit einer der Seitenstreben 20 des Dreiecks, die an die Ecke 18 angrenzt, verbindet. Die Haltestrebe 19 kann sich senkrecht zur Querstrebe 16 und/oder entlang der Stapelrichtung R erstrecken.

Das Anschlagelement 17 kann zwei Haltestreben 19 aufweisen, die jeweils eine andere der die Ecke 18 bildenden Seitenstreben 20 des Dreiecks mit der Querstrebe 16 verbindet. Die Haltestreben 19 können beidseitig der Ecke 18 angeordnet sein. Die Ecke 18 kann mittig zwischen den Haltestreben 19 angeordnet sein. Das Dreieck kann ein gleichschenkliges Dreieck sein. Die Ecke 18 kann die Spitze des gleichschenkligen Dreiecks sein. Die Seitenstreben 20 können dazu ausgebildet sein, um beim Anheben der Haltegestells 3 wirkende Zugkräfte zumindest teilweise in die Querstrebe 16 abzuleiten. Die zumindest eine Haltestrebe 19 kann dazu ausgebildet sein, um eine auf die Seitenstreben 20 des Dreiecks beim Anheben der Haltegestells 3 wirkende Zugkräfte zumindest teilweise in die Querstrebe 16 abzuleiten.

Das Anschlagmittel 15 kann wenigstens eine Stützstrebe 21 aufweisen, die einen außermittigen Abschnitt der Querstrebe 16 abstützt. Ein erstes Ende der Stützstrebe 21 kann an der Querstrebe 16 und ein zweites Ende der Stützstrebe 21 kann beabstandet von der Querstrebe 16 an einem der Halterahmen 4, 5 angeordnet sein. Beispielswiese ist die Stützstrebe 21 an der Querstrebe 16 und am Halterahmen 4, 5, etwa an dessen in die Stapelrichtung R weisenden Seite, befestigt.

Das Anschlagmittel 15 kann wenigstens zwei Stützstreben 21 aufweisen, wobei die Querstrebe 16 beispielsweise in der Breitenrichtung B zwischen den Stützstreben 21 angeordnet sein kann. Die Stützstreben 21 können dazu ausgebildet sein, beim Anheben oder Absenken des Haltegestells 3 in der Schwerkraftrichtung wirkende Kräfte in den Halterahmen 4, 5 abzuleiten. Alternativ oder zusätzlich können die Stützstreben 21 dazu ausgebildet sein, entlang der Breitenrichtung B auf die Querstrebe 16 wirkende Kräfte in einen der Halterahmen 4, 5 abzuleiten.

Die Stützstrebe 21 kann Teil einer weiteren Dreiecksform sein, wobei die Dreiecksform die Form eines rechtwinkligen Dreiecks aufweisen kann. Die Stützstrebe 21 kann die Grundseite der Dreiecksform bilden. Die Querstrebe 16, insbesondere ein Längsende der Querstrebe 16, kann eine Seite oder Kathete der Dreiecksform bilden. Der Halterahmen 4, 5 und insbesondere dessen in die Stapelrichtung R weisende Seite kann eine weitere Seite oder Kathete der Dreiecksform bilden. Alternativ oder zusätzlich kann das Anschlagmittel 15 eine Anlagestrebe 22 aufweisen, die die eine Seite oder Kathete bildet. Die Querstrebe 16 kann beispielsweise entlang der Breitenrichtung B an der Anlagestrebe 22 anliegen und optional an dieser befestigt sein.

Zwei Stützstreben 21, die denselben Halterahmen 4, 5 mit der Querstrebe 16 verbinden, können ein Stützstrebenpaar bilden. Weisen die Stützstreben 21 des Stützstrebenpaares jeweils eine Anlagestrebe 22 auf, so kann die Querstrebe 16 zwischen den Stützstreben 21 angeordnet und beispielsweise entlang der Breitenrichtung B spielfrei eingepasst sein.

Das Anschlagmittel 15 kann wenigstens zwei Stützstrebenpaare aufweisen, wobei ein erstes der Stützstrebenpaare einen der Halterahmen 4 mit der Querstrebe 16 und ein zweites der Stützstrebenpaare den anderen der Halterahmen 5 mit der Querstrebe 16 Kraft übertragend verbinden kann.

Die Abtropfvorrichtung 1 kann einen Halteriegel 23 aufweisen, der dazu ausgebildet sein kann, das Haltegestell 3 relativ zum Schwenkgestell 13 in seiner ungeschwenkten Abtropfposition und/oder in einer geschwenkten und beispielsweise vollständig umgeschwenkten oder gewendeten Abtropfposition zu halten.

Der Halteriegel 23 kann am Schwenkgestell 13 angebracht sein. Der Halteriegel 23 kann entlang der Breitenrichtung B verschiebbar ausgebildet sein. In seiner Halteposition kann der Halteriegel 23 in eine Halteöffnung des Haltegestells 3 eingreifen. Beispielsweise kann zumindest einer der Halterahmen die Halteöffnung aufweisen. Alternativ zur Halteöffnung kann das Haltegestell 3 und beispielsweise dessen Halterahmen 5 eine Haltefläche aufweisen, die gegen den Halteriegel 23 drückt, falls eine Kraft das Haltegestell 3 aus der aktuellen Abtropfposition zu schwenken oder zu drehen sucht.

Ist der Halteriegel 23 entlang der Breitenrichtung B aus der Halteposition in eine Freigabeposition überführt, kann das Haltegestell 3 schwenkbar oder drehbar sein. Anschließend kann der Halteriegel 23 entlang der Breitenrichtung B wieder aus der Freigabeposition in die Halteposition überführt werden, um die jeweilige Schwenkstellung zu arretieren.

Das Schwenkgestell 13 kann eine Grundkonstruktion 13A aufweisen, die einen Grundrahmen 13B aufweisen kann. Die Grundkonstruktion 13A kann Rollen oder Füße aufweisen, auf denen der Grundrahmen 13B angeordnet sein kann. Auf der Grundkonstruktion 13A und insbesondere auf dem Grundrahmen 13B kann eine Lagerkonstruktion 13C montiert sein, die die Grundkonstruktion 13A und beispielsweise den Grundrahmen 13B mit der Schwenkhalterung 14 verbindet. Die Lagerkonstruktion 13C kann ausgebildet sein, zumindest die Gewichtskraft des mit Halteblechen 2 und Käsemasse in Abtropfformen 6 beladenen Haltegestells 3 in die Grundkonstruktion 13A abzuleiten. Die Grundkonstruktion 13A kann dazu ausgebildet sein, die Gewichtskraft über die Rollen oder die Füße in eine Aufstellfläche, auf der die Abtropfvorrichtung 1 steht, abzuleiten.

Die Lagerkonstruktion 13C kann wenigstens zwei Abstützstreben 13D und 13E aufweisen, die die Grundkonstruktion 13A und beispielsweise unterschiedliche Ecken des beispielhaft rechteckig ausgeformten Grundrahmens 13B mit der Schwenkhalterung 14 verbindet. Die Ecken, die mit den beiden Abstützstreben 13D, E mit der Schwenkhalterung 14 verbunden sind, können entlang der Schwenkrichtung S hintereinander angeordnet sein.

Die beiden Abstützstreben 13D und 13E können entlang der Schieberichtung S hintereinander angeordnet sein. Die beiden Abstützstreben 13D und 13E und eine die Ecken verbindende Seite des Grundrahmens 13B können ein gleichschenkliges Dreieck bilden, wobei die Schwenkhalterung in der Spitze des Dreiecks angeordnet sein kann. Die Spitze des Dreiecks kann der Seite, die die Ecken verbindet, gegenüberliegen. Die Abtropfvorrichtung 1 kann zwei Abstützstrebenpaare aufweisen. Jedes der Abstützstrebenpaare kann zwei Abstützstreben 13D und 13E aufweisen. Das Haltegestell 3 kann in der Breitenrichtung B zwischen den Abstützstrebenpaaren anordnenbar sein.

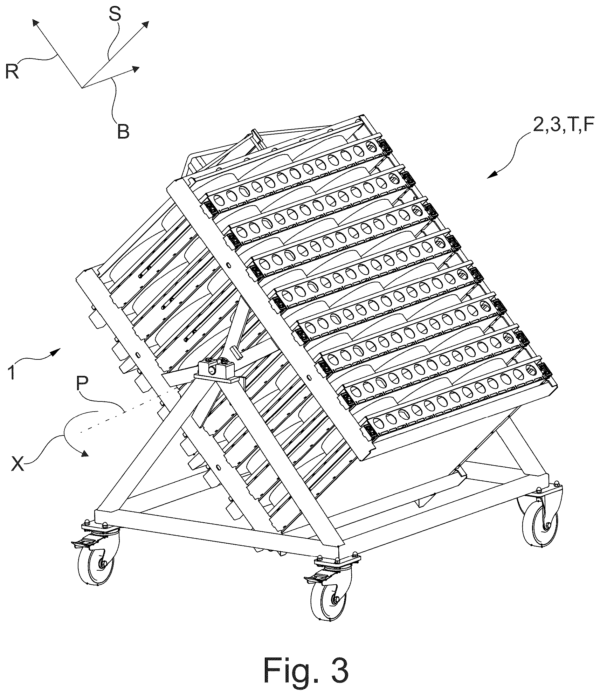

Figur 3 zeigt die Abtropfvorrichtung 1 mit einem um die Schwenkachse P aus seiner ungeschwenkten Abtropfposition U teilweise heraus geschwenkten Haltegestell 3. Das Haltegestell 3 ist in seiner teilweise geschwenkten Abtropfposition T dargestellt. In einer Schwenkrichtung X liegt die teilweise geschwenkte Abtropfposition T zwischen der ungeschwenkten Abtropfposition U und der vollständig umgeschwenkten oder gewendeten Abtropfposition.

Die Schwenkrichtung X kann um die Schwenkachse P und weg von der Vorderseite F verlaufen. In der teilweise geschwenkten Abtropfposition T kann die Vorderseite F also wenigstens teilweise entgegen die Schwerkraftrichtung weisen, sodass ein ungewolltes Gleiten des zumindest einen Abtropfblechs 2 durch die Vorderseite F vermieden wird. Ein senkrecht zur Rahmenebene angeordneter und zur Schwenkrichtung S paralleler Vektor kann eine Komponente aufweisen, die entgegen der Schwerkraft angeordnet ist.

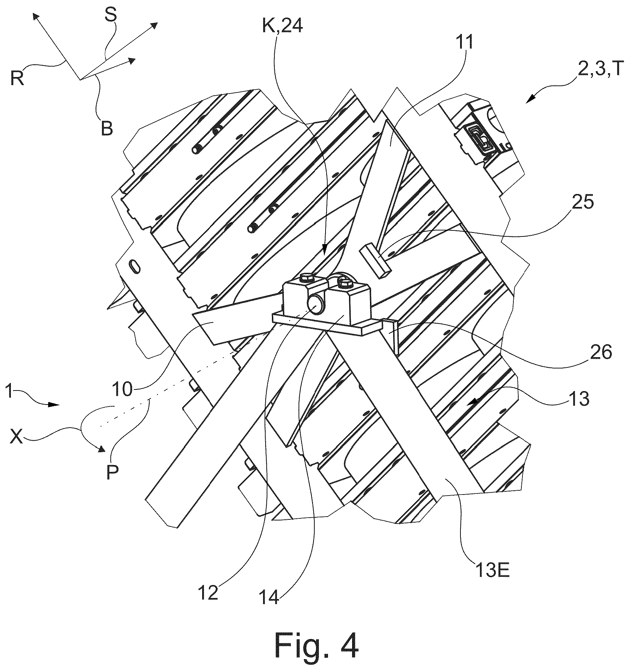

Figur 4 zeigt die Abtropfvorrichtung 1 mit dem Haltegestell 3 in seiner teilweise geschwenkten Abtropfposition T teilweise und vergrößert.

Figur 4 zeigt den zumindest einen Achsstift 12, der entlang der Breitenrichtung B vom Haltegestell 3 weg vorspringt und beispielhaft auf dem Kreuzungsbereich K der Befestigungsstreben 10, 11 fußen kann.

Die Schwenkhalterung 14 kann ein Schwenklager für die Schwenkachse P und insbesondere für den Achsstift 12 bereitstellen. Die zumindest eine Schwenkhalterung 14 ist beispielhaft mit einer als Aufnahmenut 24 ausgestalteten Aufnahmeöffnung dargestellt, die sich auch in der teilweise geschwenkten Abtropfposition T des Haltegestells 3 entgegen der Schwerkraftrichtung öffnet. Die Schwenkhalterung 14 kann also dazu ausgebildet sein, nicht mit dem Haltegestell 3 zu schwenken. Das Haltegestell 3 kann unabhängig von der Schwenkhalterung 14 schwenken. Die Schwenkhalterung 14 kann als Festlager bezeichnet werden.

Insbesondere der Achsstift 12 kann ohne weiteres entlang der Schwerkraftrichtung in die Aufnahmenut 24 einsetzbar und aus dieser entnehmbar sein. Senkrecht zur Schwerkraftrichtung und zur Schwenkachse P können Seitenwangen der Aufnahmenut 24 ein Verschieben des in der Aufnahmenut 24 angeordneten Achsstiftes 12 begrenzen oder gar verhindern.

Die Abtropfvorrichtung 1 kann wenigstens einen Schwenkbegrenzungsanschlag 25 und einen Gegenschwenkbegrenzungsanschlag 26 aufweisen, die gemeinsam ein Schwenken oder Rotieren des Haltegestells 3 entgegen der Schwenkrichtung X über die ungeschwenkte Abtropfposition U hinaus verhindern können.

Beispielsweise kann der Schwenkbegrenzungsanschlag 25 am Haltegestell 3 und zum Beispiel an zumindest einer der Befestigungsstreben 10, 11 angeordnet sein. Insbesondere kann der Schwenkbegrenzungsanschlag 25 an einer vom Haltegestell 3 weg weisenden Seite zumindest einer der Befestigungsstreben 10, 11 angeordnet sein. Zum Beispiel kann der Schwenkbegrenzungsanschlag 25 beabstandet vom Achsstift 12 am Kreuzungsbereich K angeordnet sein. Die Abtropfvorrichtung 1 kann zwei Schwenkbegrenzungsanschläge 25 aufweisen. Die beiden Schwenkbegrenzungsanschläge 25 können symmetrisch zum Schwenkachse P angeordnet sein.

Der Gegenschwenkbegrenzungsanschlag 26 kann am Schwenkgestell 13 angebracht sein. Beispielsweise kann das Gegenschwenkbegrenzungsanschlag 26 an einer der Abstützstreben 13E befestigt sein. Insbesondere kann das Gegenschwenkbegrenzungsanschlag 26 an einer zum Haltegestell 3 weisenden Seite der Abstützstreben 13E angeordnet sein.

Die Abtropfvorrichtung 1 kann zwei Gegenschwenkbegrenzungsanschläge 26 aufweisen. Die beiden Gegenschwenkbegrenzungsanschläge 26 können identisch beabstandet zur Schwenkachse P und/oder zu den Ecken, die die Seite des Grundrahmens 13B verbindet, angeordnet sein.

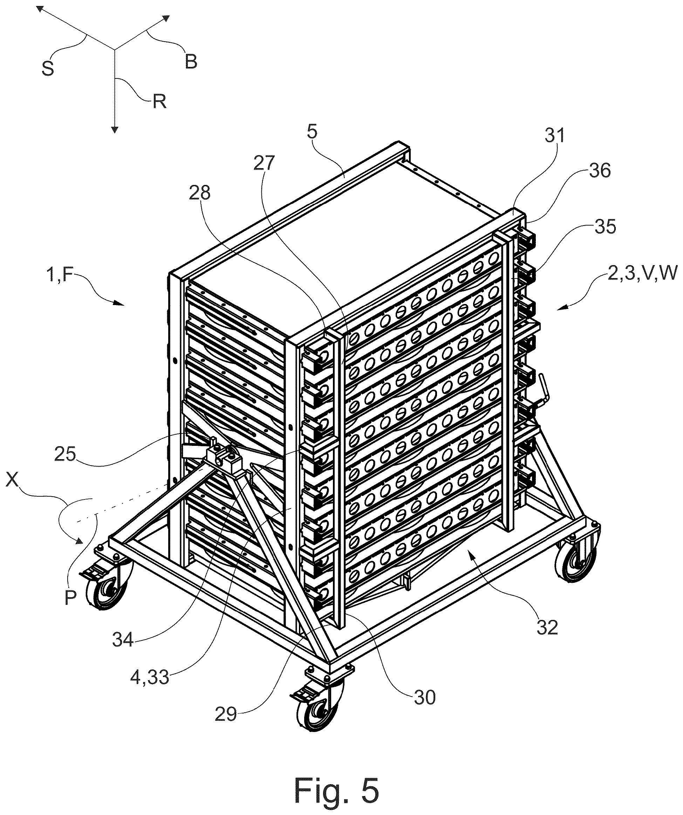

Figur 5 zeigt die Abtropfvorrichtung 1 der bisherigen Figuren mit dem Haltegestell 3 in seiner vollständig umgeschwenkten oder gewendeten Abtropfposition V.

Die Abtropfvorrichtung 1 kann einen weiteren Gegenschwenkbegrenzungsanschlag aufweisen, der mit dem Schwenkbegrenzungsanschlag 25 zusammenwirkt, um ein Schwenken des Haltegestells 3 in der Schwenkrichtung X über die vollständig umgeschwenkten Abtropfposition V hinaus zu verhindern. Alternativ oder zusätzlich kann die Abtropfvorrichtung 1 kann einen weiteren Schwenkbegrenzungsanschlag aufweisen, der mit dem Gegenschwenkbegrenzungsanschlag 26 zusammenwirkt, um ein Schwenken des Haltegestells 3 in der Schwenkrichtung X über die vollständig umgeschwenkten Abtropfposition V hinaus zu verhindern.

Der weitere Schwenkbegrenzungsanschlag kann wie der Schwenkbegrenzungsanschlag 25 ausgebildet und angeordnet sein, jedoch entlang der Schieberichtung S auf der gegenüberliegenden Seite der Schwenkachse P. Der weitere Gegenschwenkbegrenzungsanschlag kann wie der Gegenschwenkbegrenzungsanschlag 26 ausgebildet und angeordnet sein, jedoch entlang der Schieberichtung S auf der gegenüberliegenden Seite der Schwenkachse P.

Die Vorderseite F des Haltegestells 3 weist in der Figur 5 nun nicht mehr im Wesentlichen aus der Zeichenebene heraus, sondern in die Zeichenebene hinein. Stattdessen weist die Rückseite W des Haltegestells 3 im Wesentlichen aus der Zeichenebene heraus.

Das Haltegestell 3 kann an der Rückseite W zumindest einen Begrenzungsbügel 27 aufweisen, der zur Begrenzung einer Schiebebewegung des wenigstens einen Abtropfblechs 2 entgegen der Schieberichtung S angeordnet ist. Der eingeschobene Zustand E des wenigstens einen Abtropfblechs 2 kann dessen maximal eingeschobener Position entsprechen, in der das wenigstens einen Abtropfblech 2 am Begrenzungsbügel 27 anliegen kann.

Beispielsweise ist der zumindest eine Begrenzungsbügel 27 quer zum wenigstens einen Abtropfblech 2 verlaufend angeordnet. So kann der Begrenzungsbügel 27 in einer stationären beziehungsweise der ungeschwenkten Abtropfposition U und/oder in der vollständig umgeschwenkten Abtropfposition V entlang einer Vertikalrichtung verlaufend angeordnet sein. In der stationären beziehungsweise der ungeschwenkten Abtropfposition U und/oder in der vollständig umgeschwenkten Abtropfposition V kann die Vertikalrichtung der Stapelrichtung R entsprechen. In der teileweise geschwenkten Abtropfposition T kann der zumindest eine Begrenzungsbügel 27 in der Schwerkraftrichtung zumindest abschnittsweise vor dem wenigstens einen Abtropfblech angeordnet sein.

Der zumindest eine Begrenzungsbügel 27 kann zwei Längsenden 28, 29 und einen die Längsenden 28, 29 miteinander verbindenden Verbindungsabschnitt 30 aufweisen.

Die Längsenden 28, 29 und/oder der Verbindungsabschnitt 30 können jeweils am Haltegestell 3 und beispielsweise an einem der Halterahmen 4 befestigt sein. Eines der Längsenden 28 kann sich entlang der Schieberichtung S vom Verbindungsabschnitt 30 zu dem einen der Halterahmen 4 erstrecken und an einer entlang der Breitenrichtung B verlaufenen ersten Rahmenstrebe 31 des Halterahmens 4 befestigt sein. Das andere der Längsenden 29 kann sich entlang der Schieberichtung S vom Verbindungsabschnitt 30 zu dem einen der Halterahmen 4 erstrecken und an einer entlang der Breitenrichtung B verlaufenen zweiten Rahmenstrebe 32 des Halterahmens 4 befestigt sein.

Die entlang der Breitenrichtung B verlaufenen Rahmenstreben 31, 32 können in der Stapelrichtung R voneinander beabstandet angeordnet sein.

Der Verbindungsabschnitt 30 kann an einer entlang der Stapelrichtung R verlaufenden Rahmenstrebe 33 angebracht sein. Der Begrenzungsbügel 27 kann wenigstens ein Zwischenverbindungstück 34 aufweisen, das den Verbindungsabschnitt 30 an der Rahmenstrebe 33 befestigt. Im gezeigten Ausführungsbeispiel weist der Begrenzungsbügel 27 beispielhaft zwei Zwischenverbindungstücke 34 auf, die entlang der Stapelrichtung R voneinander und von den Rahmenstreben 31, 32 beabstandet angeordnet sind. Mehrere Begrenzungsbügel 27 können entlang der Rahmenstrebe 33 gleichmäßig verteilt angeordnet sein.

Die Abtropfvorrichtung 1 kann zwei Begrenzungsbügel 27, 35 aufweisen, wobei einer der Begrenzungsbügel 27 an den Rahmenstreben 31, 32, 33 befestigt ist und der andere der Begrenzungsbügel 35 an den Rahmenstreben 31, 32 sowie an einer weiteren entlang der Stapelrichtung R verlaufenden Rahmenstrebe 36 angebracht ist. Die weitere Rahmenstrebe 36 kann entlang der Breitenrichtung B von der Rahmenstrebe 33 beabstandet angeordnet sein.

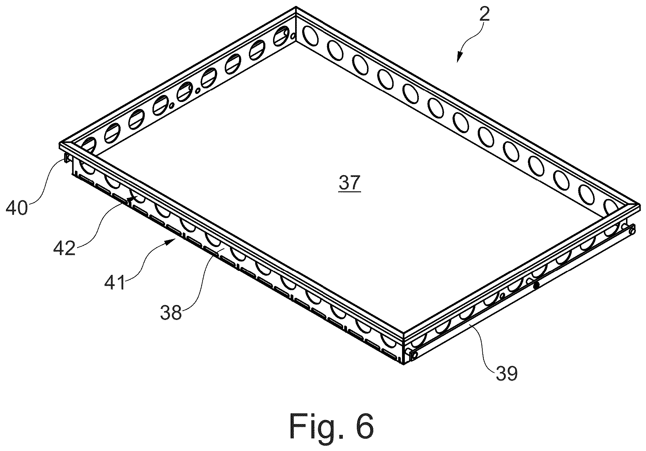

Figur 6 zeigt ein Ausführungsbeispiel eines Abtropfblechs 2 schematisch in einer Perspektivansicht. Das Abtropfblech 2 kann einen Abstellboden 37 aufweisen, auf dem in einer Abtropfform 6 angeordnete Käsemasse aufliegen kann. Das Abtropfblech 2 kann einen Rand 38 aufweisen, der senkrecht zum Abstellboden 37 vom Abstellboden 37 vorspringen und/oder den Abstellboden 37 zumindest teilweise umlaufen kann.

Ein freies und vom Abstellboden 37 weg weisendes Ende des Randes 38 kann eine Auflagefläche für den Verbindungsabschnitt 7A bereitstellen. Um die Auflagefläche zu vergrößern, kann das vom Abstellboden 37 weg weisendes Ende des Randes 38 weg vom Abstellboden 37 umgebogen sein.

Das Abtropfblech 2 kann die zweite Teilschiene 39 aufweisen, die an einer vom Abstellboden 37 weg weisenden Seite des Rands 38 angeordnet sein kann. Das Abtropfblech 2 kann eine weitere zweite Teilschiene 40 aufweisen, wobei die beiden zweiten Teilschienen an voneinander weg weisenden Seiten des Rands 38 angeordnet sein können.

Der Rand 38 kann zumindest eine Ablauföffnung 41 aufweisen, um abgetropfte Flüssigkeit ablaufen zu lassen. Die Ablauföffnung 41 kann an den Abstellboden 37 angrenzen. Der Rand 38 kann zumindest eine Lüftungsöffnung 42 aufweisen, um einen Luftzug über den Abstellboden 37 zu ermöglichen. Die Lüftungsöffnung 42 kann beabstandet vom Abstellboden 37 angeordnet sein. Insbesondere kann der Rand 38 vier gerade Seiten aufweisen. Ausgewählte oder sogar jede der vier gerade Seiten kann mindestens eine Ablauföffnung 41 aufweisen. Im gezeigten Ausführungsbeispiel weist beispielhaft nur eine der vier geraden Seiten Ablauföffnungen 41 auf. Ausgewählte oder sogar jede der vier gerade Seiten kann mindestens eine Lüftungsöffnung 42 aufweisen.

Das den Abstellboden 37 und den Rand 38 sowie die zweite Teilschiene 39 aufweisende Abtropfblech 2 kann auch als Abtropfschublade bezeichnet werden.

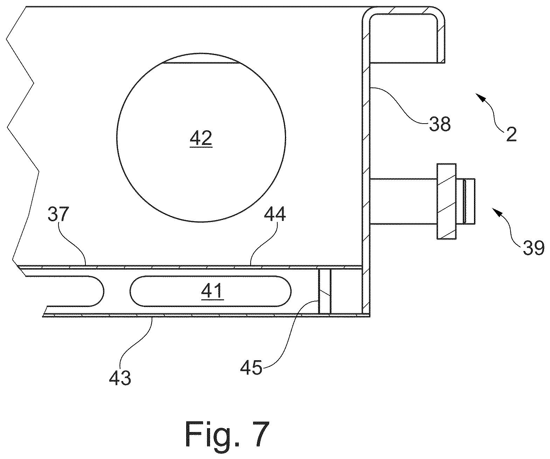

Figur 7 zeigt ein weiteres Ausführungsbeispiel des Abtropfblechs 2 schematisch und teilweise in einer Schnittdarstellung. Der Abstellboden 37 kann einen doppelten Boden mit mehreren und insbesondere zwei Teilböden 43, 44 aufweisen. Der doppelte Boden und beispielswiese zumindest einer der Teilböden 43, 44 kann aus Streckmetall gefertigt sein. Beispielsweise kann die Oberfläche des Abstellbodens 37, also ausgewählter oder aller Teilböden 43, 44 des doppelten Bodens des Abstellbodens 37, elektropoliert und/oder beschichtet sein, insbesondere zur Haftverringerung der Käsemasse am Abstellboden 37. Die Ablauföffnung 41 kann zwischen den Teilböden 43, 44 angeordnet sein.

Zwischen den Teilböden 43, 44 kann zumindest eine Versteifungsstrebe 45 angeordnet sein, um ein Verformen der Teilböden 43, 44 durch die Gewichtskraft von auf dem Abstellboden 37 abgestellten Abtropfformen 6 mit Käsemasse zu verringern oder gar zu verhindern. Die Versteifungsstrebe 45 kann die Teilböden 43, 44 aneinander befestigen. Die Versteifungsstrebe 45 kann plattenförmig ausgebildet sein, wobei sich die Platte im Wesentlichen in der senkrecht zum Abstellboden 37 verlaufenden Richtung und parallel zu einer der Seiten des Rands 38 erstecken kann. Das Abtropfblech 2 kann mehrere Versteifungsstreben 45 aufweisen, die zwischen den Teilböden 43, 44 angeordnet sein und/oder die Teilböden 43, 44 aneinander befestigen können. Die Versteifungsstreben 45 können parallel zueinander ausgerichtet und senkrecht zueinander beabstandet sein können.

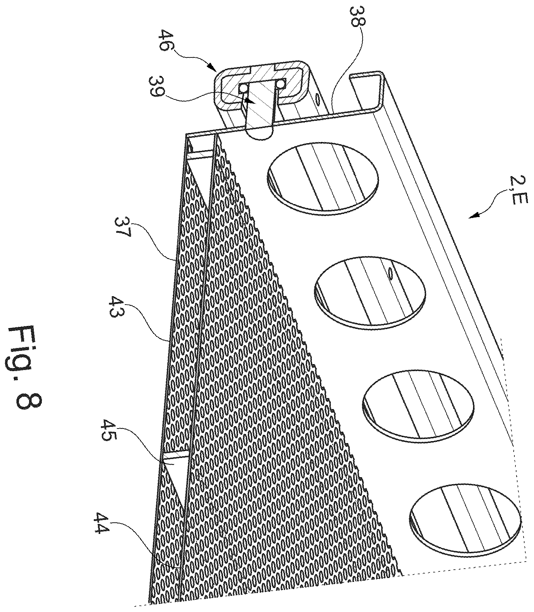

Figur 8 zeigt ein weiteres Ausführungsbeispiel des Abtropfblechs 2 schematisch in einer Schnittdarstellung. Der Abstellboden 37 kann gelocht oder siebförmig oder gitterförmig ausgestaltet sein. Dabei können ausgewählte oder alle der Teilböden 43, 44 des einen doppelten Boden aufweisenden Abstellbodens 37 gelocht oder siebförmig oder gitterförmig ausgestaltet sein.

Im gezeigten Ausführungsbeispiel sind beispielhaft beide Teilböden 43, 44 des Abstellbodens 37 gelocht oder siebförmig oder gitterförmig ausgestaltet.

Insbesondere kann der Abstellboden 37 die zwei Teilböden 43, 44 aufweisen, von denen mindestens einer gelocht oder siebförmig oder gitterförmig ausgestaltet sein kann. In einer senkrecht zum Abstellboden 37 verlaufenden Richtung können die Teilböden 43, 44 zueinander beabstandet sein. Um ein Verformen der Teilböden 43, 44 durch die Gewichtskraft von auf dem Abstellboden 37 abgestellten Abtropfformen 6 mit Käsemasse zu verringern oder gar zu verhindern, kann das Abtropfblech 2 die zumindest eine Versteifungsstrebe 45 aufweisen. Die Versteifungsstrebe 45 kann zwischen den Teilböden 43, 44 angeordnet sein. Die Versteifungsstrebe 45 kann die Teilböden 43, 44 aneinander befestigen. Die Versteifungsstrebe 45 kann plattenförmig ausgebildet sein, wobei sich die Platte im Wesentlichen in der senkrecht zum Abstellboden 37 verlaufenden Richtung und parallel zu einer der Seiten des Rands 38 erstecken kann.

Das Abtropfblech 2 kann mehrere Versteifungsstreben 45 aufweisen, die zwischen den Teilböden 43, 44 angeordnet sein und/oder die Teilböden 43, 44 aneinander befestigen können. Die Versteifungsstreben 45 können parallel zueinander ausgerichtet und senkrecht zueinander beabstandet sein können.

Ferner ist das Abtropfblech 2 in der Figur 8 beispielhaft in seinem eingeschobenen Zustand E gezeigt, in der die zweite Teilschiene 39 in die erste Teilschiene 46 eingeschoben sein kann.

### BEZUGSZEICHENLSTE

- 1: Abtropfvorrichtung
- 2: Abtropfblech
- 3: Haltegestell
- 4, 5: Halterahmen
- 6: Abtropfform
- 7: Aufnahmeabschnitt
- 7A: Verbindungsabschnitt
- 8: Führungseinrichtung
- 9: Schwenkvorrichtung
- 10, 11: Befestigungsstreben
- 12: Achsstift
- 13: Schwenkgestell
- 13A: Grundkonstruktion
- 13B: Grundrahmen
- 13C: Lagerkonstruktion
- 13D, E: Abstützstreben
- 14: Schwenkhalterung
- 15: Anschlagmittel
- 16: Querstrebe
- 17: Anschlagelement
- 18: Ecke
- 19: Haltestrebe
- 20: Seitenstrebe
- 21: Stützstrebe
- 22: Anlagestrebe
- 23: Halteriegel
- 24: Aufnahmenut
- 25: Schwenkbegrenzungsanschlag
- 26: Gegenschwenkbegrenzungsanschlag
- 27, 35: Begrenzungsbügel
- 28, 29: Längsenden
- 30: Verbindungsabschnitt
- 31, 32: Rahmenstreben parallel zur Breitenrichtung
- 33, 36: Rahmenstreben parallel zur Stapelrichtung
- 34: Zwischenverbindungstück
- 37: Abstellboden
- 38: Rand
- 39, 40: zweite Teilschiene
- 41: Ablauföffnung
- 42: Lüftungsöffnung
- 43, 44: Teilböden
- 45: Versteifungsstrebe
- 46: erste Teilschiene

- A: ausgezogener Zustand
- B: Breitenrichtung
- D: Abstand
- F: Vorderseite
- E: eingeschobener Zustand
- K: Kreuzungsbereich
- M, N: vertikale Endseiten
- P: Schwenkachse
- R: Stapelrichtung
- S: Schieberichtung
- U: ungeschwenkte Abtropfposition
- T: teilweise geschwenkte Abtropfposition
- V: vollständig umgeschwenkte Abtropfposition
- W: Rückseite
- X: Schwenkrichtung

## Patentansprüche

1. Abtropfvorrichtung (1) zur Aufbewahrung von abzutropfender Käsemasse mit wenigstens einem Abtropfblech (2) zur Ablage von abzutropfender Käsemasse und mit einem Haltegestell (3), wobei das Abtropfblech (2) entlang einer Schieberichtung (S) relativ zum Haltegestell (3) schiebbar diesem angebracht ist.

2. Abtropfvorrichtung (1) nach Anspruch 1, **dadurch gekennzeichnet, dass** das Haltegestell (3) zwei mit einem Abstand (A) zueinander angeordnete Halterahmen (4, 5) aufweist, an denen das wenigstens eine Abtropfblech (2) entlang der Schieberichtung (S) schiebbar angebracht ist.

3. Abtropfvorrichtung (1) nach Anspruch 1 oder 2, **dadurch gekennzeichnet, dass** wenigstens einer der Halterahmen (4, 5) in einer sich quer zur Schieberichtung (S) ersteckenden Rahmenebene angeordnet ist.

4. Abtropfvorrichtung (1) nach Anspruch 2 oder 3, **dadurch gekennzeichnet, dass** die Abtropfvorrichtung (1) eine das Schieben des wenigstens einen Abtropfbleches (2) entlang der Schieberichtung (S) führende Führungseinrichtung (8) aufweist, wobei bevorzugt die Führungseinrichtung (8) die Halterahmen (4, 5) aneinander befestigt und/oder miteinander verbindet und/oder die Führungseinrichtung (8) durch mindestens eine der Rahmenebenen oder beide Rahmenebenen hindurch verläuft.

5. Abtropfvorrichtung (1) nach einem der Ansprüche 1 bis 4, **gekennzeichnet durch** eine Schwenkvorrichtung (9) mit einer parallel zu dem wenigstens einen Abtropfblech (2) verlaufenden Schwenkachse (P).

6. Abtropfvorrichtung (1) nach Anspruch 5, **dadurch gekennzeichnet, dass** die Schwenkvorrichtung (9) die Halterahmen (4, 5) aneinander befestigt und/oder miteinander verbindet, insbesondere nach Art eines Fachwerks und/oder durch eine Mehrzahl an Befestigungsstreben (10, 11).

7. Abtropfvorrichtung (1) nach Anspruch 5, **dadurch gekennzeichnet, dass** die Schwenkvorrichtung (9) zwei die Halterahmen (4, 5) fachwerkartig aneinander befestigende und/oder miteinander verbindende und sich in einem Kreuzungsbereich (K) kreuzende Befestigungsstreben (10, 11) aufweist, wobei sich eine Schwenkachse (P) der Schwenkvorrichtung (9) bevorzugt durch den Kreuzungsbereich (K) erstreckt.

8. Abtropfvorrichtung (1) nach einem der Ansprüche 5 bis 7, **gekennzeichnet durch** ein Schwenkgestell (13) mit zumindest einer Schwenkhalterung (14) zum schwenkbaren Halten der Schwenkvorrichtung (9), wobei das Schwenkgestell (13) bevorzugt als Wagen mit Rollen ausgebildet ist.

9. Abtropfvorrichtung (1) nach Anspruch 8, **dadurch gekennzeichnet, dass** die Schwenkvorrichtung (9) und die zumindest eine Schwenkhalterung (14) wenigstens abschnittsweise wiederholt ineinander einsetzbar und voneinander entfernbar ausgestaltet sind, insbesondere werkzeugfrei ineinander einsetzbar und voneinander entfernbar ausgestaltet sind.

10. Abtropfvorrichtung (1) nach einem der Ansprüche 1 bis 9, **dadurch gekennzeichnet, dass** das Haltegestell (3) eine Vorderseite (F) und eine der Vorderseite (F) gegenüberliegende Rückseite (W) aufweist, wobei das wenigstens eine Abtropfblech (2) durch die Vorderseite (F) hindurch entlang der Schieberichtung (S) schiebbar ist und wobei das Haltegestell (3) an der Rückseite (W) zumindest einen Begrenzungsbügel (27, 35) aufweist, der zur Begrenzung einer Schiebebewegung des wenigstens einen Abtropfblechs (2) durch die Rückseite (W) angeordnet ist.

11. Abtropfvorrichtung (1) nach Anspruch 10, **dadurch gekennzeichnet, dass** der zumindest eine Begrenzungsbügel (27, 35) quer zum wenigstens einen Abtropfblech (2) verlaufend und/oder in einer stationären und ungeschwenkten Abtropfposition (U) des Haltegestells (3) entlang einer Vertikalrichtung verlaufend angeordnet ist.

12. Abtropfvorrichtung (1) nach Anspruch 10 oder 11, **dadurch gekennzeichnet, dass** der zumindest eine Begrenzungsbügel (27, 35) zwei Längsenden (28, 29) und einen die Längsenden (28, 29) miteinander verbindenden Verbindungsabschnitt (30) aufweist, wobei die Längsenden (28, 29) und der Verbindungsabschnitt (30) jeweils am Haltegestell (3) befestigt sind.

13. Abtropfvorrichtung (1) nach einem der Ansprüche 1 bis 12, **dadurch gekennzeichnet, dass** das Haltegestell (3) zwei einander gegenüberliegend angeordnete vertikale Endseiten (N, M) aufweist und dass an einer der vertikalen Endseiten (N) ein Anschlagmittel (15) angeordnet und angebracht ist und/oder, dass das Anschlagmittel (15) den Abstand (A) zwischen den Halterahmen (4, 5) überbrückt und/oder dass das Anschlagmittel (15) an einer den Abstand (A) zwischen dem Halterahmen (4, 5) überbrückenden Querstrebe (16) angeordnet ist.

14. Abtropfvorrichtung (1) nach einem der Ansprüche 1 bis 13, **gekennzeichnet durch** mehrere entlang der Schieberichtung (S) relativ zum Haltegestell (3) schiebbar am Haltegestell (3) angebrachte Abtropfbleche (2), wobei die mehreren Abtropfbleche (2) in einer quer zur Schieberichtung (S) verlaufenden Stapelrichtung (R) hintereinander und/oder übereinander stapelbar sind.

15. Abtropfvorrichtung (1) nach einem der Ansprüche 1 bis 14, **dadurch gekennzeichnet, dass** das wenigstens eine Abtropfblech (2) oder zumindest ein Abtropfblech (2) der mehreren Abtropfbleche (2) einen doppelten Boden, insbesondere aus Streckmetall, aufweist, wobei bevorzugt die Oberfläche eines Bodens oder der Böden (43, 44) elektropoliert und/oder beschichtet ist, insbesondere zur Haftverringerung.
